(19) Europäisches Patentamt
European Patent Office
Office européen des brevets

(11) Publication number: **0 021 536**
**B1**

(12) # EUROPEAN PATENT SPECIFICATION

(45) Date of publication of patent specification: **17.11.82**

(51) Int. Cl.³: **C 09 K 11/46,**
C 09 K 11/475,
H 01 J 61/44

(21) Application number: **80200589.2**

(22) Date of filing: **20.06.80**

(54) **Luminescent silicate, luminescent screens and lamps comprising such a luminescent silicate.**

(30) Priority: **26.06.79 NL 7904953**

(43) Date of publication of application:
**07.01.81 Bulletin 81/1**

(45) Publication of the grant of the patent:
**17.11.82 Bulletin 82/46**

(84) Designated Contracting States:
**BE DE FR GB IT NL**

(56) References cited:
**DE - A - 1 804 546**
**DE - A - 1 924 160**
**DE - A - 2 218 178**
**FR - A - 2 089 918**
**US - A - 4 052 329**

(73) Proprietor: **N.V. Philips' Gloeilampenfabrieken**
**Groenewoudseweg 1**
**NL-5621 BA Eindhoven (NL)**

(72) Inventor: **Konijnendijk, Willem Leendert**
**c/o Int. Octrooibureau B.V. Prof. Holstlaan 6**
**NL-5656 AA Eindhoven (NL)**
Inventor: **Verlijsdonk, Johannus Godefridus**
**c/o Int. Octrooibureau B.V. Prof. Holstlaan 6**
**NL-5656 AA Eindhoven (NL)**
Inventor: **Looye, Bob**
**c/o Int. Octrooibureau B.V. Prof. Holstlaan 6**
**NL-5656 AA Eindhoven (NL)**

(74) Representative: **Evers, Johannes Hubertus Marie et al,**
**INTERNATIONAAL OCTROOIBUREAU B.V Prof. Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Luminescent silicate, luminescent screens and lamps comprising such a luminescent silicate

The invention relates to a luminescent silicate of an alkaline earth metal together with yttrium and/or lanthanum. In addition, the invention relates to a luminescent screen comprising such a luminescent silicate and to a low-pressure mercury discharge lamp having such a luminescent screen.

Luminescent silicates of an alkaline earth metal together with yttrium or lanthanum are known from FR—A—2 089 918. Said application describes such silicates, the crystal structure of which corresponds to the crystal structure of apatite. Efficiently luminescing materials are obtained on activation of these materials by antimony, lead and/or tin.

The publication of Dokl. Akad, Nauk SSSR *243* (1978), 891 discloses a number of silicates which are defined by the formula $Me_3^{II} Me_2^{III} Si_6 O_{18}$, wherein $Me^{II}$ represents Sr or Ca and $Me^{III}$ represents Y or an element of the lanthanum series. It appears that these compounds are crystalline materials having a triclinic crystal structure.

Object of the invention is to provide novel luminescent materials which have very advantageous properties when used in a luminescent screen.

According to the invention a luminescent silicate of an alkaline earth metal together with yttrium and/or lanthanum is characterized in that the silicate has a composition defined by the formula

$$Me_{3-p-q}\, Pb_p\, Mn_q\, Ln_{2-r-x-y-z}\, Gd_rCe_x\, Tb_y\, Dy_z\, Si_6\, O_{18}$$

wherein Me represents strontium and/or calcium and Ln represents yttrium and/or lanthanum,

wherein, if $q = r = x = y = z = 0$, it holds that $0.01 \leqslant p \leqslant 0.50$
wherein, if $p=q=y=z=0$, it holds that $0.01 \leqslant x \leqslant 0.80$
and $0 \leqslant r \leqslant 2-x$ wherein, if $q=x=y=z=0$, it holds that $0.01 \leqslant p \leqslant 0.50$
and $0.05 \leqslant r \leqslant 2.0$
and wherein otherwise it holds that $0.01 \leqslant p \leqslant 0.50$
$0.05 \leqslant r \leqslant 2-x-y-z$
$0 \leqslant q \leqslant 0.30$
$0 \leqslant x \leqslant 0.80$
$0 \leqslant y \leqslant 1.0$
$0 \leqslant z \leqslant 0.10$
$0.005 \leqslant q+x+y+z$.

It appeared that from the group of silicate compounds having a triclinic crystal structure the silicates of Sr and/or Ca together with Y and/or La are suitable host lattices for activation by at least one of the elements Pb, Mn, Gd, Ce, Tb and Dy. The luminescent materials then obtained can be properly excited, for example by ultra-violet radiation, in particular by short-wave ultra-violet radiation, and then luminesce in a very efficient manner. The choice of the elements to be used for Me and for Ln do not appear to be critical as these elements have very little influence on the luminescent properties. The above-mentioned activators can be used alone or combine, very different emissions being obtained, which are very advantageous for practical uses, depending on the choice of the activator(s). The concentrations of the activators, denoted by the indices p, q, r, x, y and z, are located within predetermined limits. In order to obtain a sufficient absorption of excitation energy and/or a sufficiently high quantum efficiency an activator is not used in a concentration below a predetermined minimum value. A predetermined maximum concentration of an activator is not exceeded to avoid the radiation efficiency from being reduced unacceptably by concentration quenching.

If the silicates are activated by lead alone ($q = r = x = y = z = 0$) materials are obtained having very short-wave length lead emission with a maximum at approx. 302 nm. The lead which replaces a portion of the Me is then chosen in a concentration, p, of not less than 0.01 and not more than 0.50.

On activation by cerium alone ($p = q = y = z = 0$) materials are obtained which emit in the near part of the ultraviolet spectrum with a maximum of the emission band at 385—400 nm. It appeared that these materials may contain gadolinium ($0 \leqslant r \leqslant 2-x$) as this element does not act as an activator element for these materials, but may occut as a lattice component (in a Ln site). The cerium concentration, x, is chose in the range from 0.01 to 0.80.

Silicates according to the invention which contain both lead and gadolinium are very efficient emitters of the characteristic Gd-radiation (line emission at approximately 313 nm). In these materials the excitation energy, for example the 254 nm-radiation of a low-pressure mercury vapour discharge lamp, is absorbed by the lead and is transferred to the gadolinium. The lead content, p, is again chosen in a range from 0.01 to 0.50. The gadolinium content, r, may be chosen between very wide limits ($0.05 \leqslant r \leqslant 2$) as then concentration quenching does not occur to a substantial extent.

On activation of the silicates by a third activator element (Mn, Ce, Tb and/or Dy) in addition to Pb ($0.01 \leqslant p \leqslant 0.50$) and Gd ($0.05 \leqslant r \leqslant 2-x-y-z$) materials are obtained having the characteristic emission of the third activator element, the minimum value of the concentration of this third activator element being 0.005 (q, x, y or z). In these materials the Gd plays an intermediate part in the transfer of

excitation energy of the Pb to the third activator element *via* Gd. If Mn is chosen as the third activator, the Mn content q being not more than 0.30, materials are obtained having a green emission band with a maximum at approximately 550 nm. The use of cerium ($x \leqslant 0.80$) as the third activator produces materials which furnish the Ce-emission in the near ultra-violet, the same as the silicates which contain only Ce or Ce together with Gd. In those cases where a relatively low Ce-content is opted for, it appears that materials containing also Pb and Gd are more efficient than the materials which contain Ce only. If terbium ($y \leqslant 1.0$) is chosen as the third activator, very efficiently luminescing materials are obtained, which have the characteristic green terbium emission. The use of dysprosium ($z \leqslant 0.1$) as the third activator produces materials having an efficient white dysprosium emission (predominantly an emission band in the yellow and, furthermore, a band in the blue part of the spectrum.

A first embodiment of a luminescent silicate according to the invention is therefore characterized in that the silicate has a composition defined by the formula $Me_{3-p}\ Pb_p\ Ln_2\ Si_6\ O_{18}$, wherein $0.03 \leqslant p \leqslant 0.25$. These materials, which only contain lead as the activator are, particularly with lead contents between 0.03 and 0.25, very efficient radiators having a relatively narrow emission band (half value width approximately 40 nm) with a maximum at approximately 302 nm. They can therefore be used to great advantage in the luminescent screen of low-pressure mercury vapour discharge lamps for photo-chemical purposes, for example for the generation of erythema.

According to the invention, a second embodiment of a luminescent silicate is characterized in that the silicate has a composition defined by the formula

$$Me_{3-p}\ Pb_p\ Ln_{2-r}\ Gd_r\ Si_6\ O_{18},$$

wherein $0.01 \leqslant p \leqslant 0.50$ and $0.50 \leqslant r \leqslant 2.0$. The lead and gadolinium-activated silicates emit in a particularly efficient manner the characteristic Gd-radiation, especially at relatively high Gd-contents (r between 0.50 and 2.0). These materials are used in the luminescent screen of low-pressure mercury vapour discharge lamps for photo-chemical purposes, particularly in such lamps for radiation purposes, for example the photo-therapy of skin diseases, such as psoriasis.

A third embodiment of a luminescent silicate according to the invention is characterized in that

$$0 \leqslant r \leqslant 2-x$$
$$0.05 \leqslant x \leqslant 0.50$$

and furthermore $p = q = y = z = 0$.

These silicates, which are only activated by Ce and which may possibly contain Gd are used in the luminescent screen of low-pressure mercury vapour discharge lamps for special purposes, for example in photo-copying apparatus, because they luminesce very efficiently in a band in the near ultra-violet and blue portion of the spectrum, particularly when x is chosen between 0.05 and 0.50.

A further advantageous embodiment of a luminescent silicate according to the invention is characterized in that

$$0.01 \leqslant p \leqslant 0.50$$
$$0.05 \leqslant r \leqslant 2-y$$
$$0.05 \leqslant y \leqslant 0.75$$

and furthermore $q = x = z = 0$.

Very high luminous fluxes are obtained on activation of the silicates by Pb, Gd and Tb, particularly for Tb-contents between 0.05 and 0.75. These green luminescing silicates are used in the luminescent screen of low-pressure mercury vapour discharge lamps for special purposes, for example for electro-photography, or in combination with a red and a blue luminescing material in such lamps for general lighting purposes.

Another embodiment of a luminescent silicate according to the invention is characterized in that

$$0.01 \leqslant p \leqslant 0.50$$
$$0.05 \leqslant r \leqslant 2-z$$
$$0.005 \leqslant z \leqslant 0.08$$

$q = x = y = 0$.

The silicate activated by Pb, Gd and Dy are efficient substantially white-light emitting materials, particularly with Dy-contents of 0.005 to 0.08. A luminescent screen provided with such a material can be used with great advantage in low-pressure mercury vapour discharge lamps for general lighting purposes.

A still further embodiment of a luminescent silicate according to the invention is characterized in that

$$0.01 \leqslant p \leqslant 0.50$$
$$0.05 \leqslant r \leqslant 2$$
$$0.005 \leqslant q \leqslant 0.15$$

$x = y = z = 0$.

Activation of the silicates by Pb, Gd and Mn, particularly with Mn-contents of 0.005 to 0.15 provides very efficient, green-emitting materials. The $Mn^{2+}$-emission in these materials appears to be a relatively long-wave emission (emission maximum at 540 to 550 nm), which can be very advantageous for practical uses. Such a luminescent silicate can be used in the luminescent screen of low-pressure mercury vapour discharge lamps for special purposes, such as electro-photography. These silicates may also be used as the green component in low-pressure mercury vapour discharge lamps for general used lighting purposes.

Some embodiments of the invention will now be described and further explained with reference to the accompanying drawing and a number of measurements.

In the drawing:

Figure 1 shows the spectral energy distribution of the emitted radiation of three luminescent silicates according to the invention and

Figure 2 shows the emission spectrum of three further silicates according to the invention. In the Figures 1 and 2 the maximum of each emission spectrum is set at 100.

Example 1

A mixture is made of

3.003 g $CaCO_3$
1.784 g $Y_2O_3$
3.786 g $SiO_2$ (5 mole% in excess)
0.723 g $CeO_2$.

This mixture was heated for 0.75 hour at 1250°C in a weakly reducing atmosphere. After cooling and pulverizing, the fired product was heated again for 3 hours at 1350°C in a weakly reducing atmosphere. After cooling, the product obtained was pulverized and mixed with 0.15% by weight of $NH_4F$ and was then fired for one hour at 1350°C in a weakly reducing atmosphere. The product thus obtained was a luminescent, Ce-activated silicate having a composition defined by the formula

$$Ca_3\ Y_{1.58}\ Ce_{0.42}\ Si_6\ O_{18}$$

with a triclinic crystal structure. The use of a slight excess of $SiO_2$ and a very small quantity of $NH_4F$, as indicated above, promotes the reaction. On excitation by the short-wave ultraviolet radiation from a low-pressure mercury vapour discharge lamp (predominantly 254 nm), the silicate luminesced efficiently (quantum efficiency approximately 53%) in a band having a maximum ($\lambda_{max}$) at 395 nm and a half value width ($\lambda_{1/2}$) of approximately 70 nm. The peak height P of the emission band was 31% of the peak height of the known, lead-activated barium disilicate $BaSi_2O_5$—Pb used as a standard in this measurement. The emission spectrum of the silicate is shown in Figure 1 by means of curve 1. In this Figure the wavelength $\lambda$ (in nm) is plotted on the horizontal axis and the emitted radiation energy E in arbitrary units on the vertical axis.

A large number of Ce-activated silicates were prepared in a similar manner to that described in Example 1. The following Table I shows for these silicates the formulae and measurements of P (in % of the above-mentioned standard) and of $\lambda_{max}$ and $\lambda_{1/2}$.

TABLE I

| Example | Formula | | | P (%) | $\lambda_{max}$ (nm) | $\lambda_{1/2}$ (nm) |
|---|---|---|---|---|---|---|
| 1 | $Ca_3Y_{1.58}$ | $Ce_{0.42}$ | $Si_6O_{18}$ | 31 | 395 | 70 |
| 2 | $Ca_3Y_{1.9}$ | $Ce_{0.1}$ | $Si_6O_{18}$ | 15 | 400 | 60 |
| 3 | $Ca_3Y_{1.8}$ | $Ce_{0.2}$ | $Si_6O_{18}$ | 25 | 395 | 60 |
| 4 | $Ca_3Y_{1.7}$ | $Ce_{0.3}$ | $Si_6O_{18}$ | 26 | 400 | 60 |
| 5 | $Ca_3Y_{1.5}$ | $Ce_{0.5}$ | $Si_6O_{18}$ | 27 | 395 | 70 |
| 6 | $Sr_3Y_{1.9}$ | $Ce_{0.1}$ | $Si_6O_{18}$ | 20 | 385 | 60 |
| 7 | $Sr_3Y_{1.6}$ | $Ce_{0.4}$ | $Si_6O_{18}$ | 23 | 390 | 70 |
| 8 | $Sr_3Gd_{1.9}$ | $Ce_{0.1}$ | $Si_6O_{18}$ | 17 | 385 | 60 |
| 9 | $Sr_3La_{1.9}$ | $Ce_{0.1}$ | $Si_6O_{18}$ | 19 | 380 | 55 |
| 10 | $Sr_3La_{0.9}$ | $GdCe_{0.1}$ | $Si_6O_{18}$ | 11 | 380 | 55 |
| 11 | $Sr_{2.9}Pb_{0.1}$ | $La_{0.9}$ | $GdCe_{0.1}Si_6O_{18}$ | 16 | 380 | 60 |
| 12 | $Ca_3Gd_{1.9}$ | $Ce_{0.1}$ | $Si_6O_{18}$ | 20 | 390 | 55 |
| 13 | $Ca_3La_{1.9}$ | $Ce_{0.1}$ | $Si_6O_{18}$ | 17 | 390 | 60 |
| 14 | $Ca_{2.9}Pb_{0.1}$ | $La_{0.9}$ | $GdCe_{0.1}Si_6O_{18}$ | 17 | 390 | 70 |

Example 15

A mixture was made of

1.451 g $CaCO_3$
0.906 g $Gd_2O_3$
0.815 g $La_2O_3$
1.803 g $SiO_2$
0.112 g PbO.

This mixture was heated for 3 hours in air at a temperature of 1350°C. After cooling and pulverizing, the product obtained was mixed with 0.5% by weight of $NH_4Cl$ and was then fire for 1 hour in air at a temperature of 1250°C. After cooling and pulverizing, the product was ready for use. It consisted of a luminescent silicate having a composition defined by the formula

$$Ca_{2.9}\ Pb_{0.1}\ LaGd\ Si_6\ O_{18}$$

and had a triclinic crystal structure. The quantum efficiency of this silicate at 254 nm-excitation was approximately 59%. Figure 1 (curve 2) shows the emission spectrum of this silicate, this spectrum consisting of some very closely spaced lines (maximum at 313 nm, half value width of the emission band approximately 3 nm). Measured relative to the peak height of the known, Bi-activated gadolinium lanthanum metaborate $Gd_{0.5}\ La_{0.487}\ Bi_{0.013}B_3O_6$ the emission peak height pH is 69%.

A number of silicates activated by lead and gadolinium were prepared in a similar manner as described in the above example. The formulae of these materials, which all have the same emission spectrum, and the results of peak height pH measurements (relative to the above-mentioned standard) are shown in Table II.

TABLE II

| Example | Formula | | | pH (%) |
|---|---|---|---|---|
| 15 | $Ca_{2.9}Pb_{0.1}$ | LaGd | $Si_6O_{18}$ | 69 |
| 16 | $Ca_{2.97}Pb_{0.03}$ | LaGd | $Si_6O_{18}$ | 57 |
| 17 | $Ca_{2.8}Pb_{0.2}$ | LaGd | $Si_6O_{18}$ | 55 |
| 18 | $Sr_{2.97}Pb_{0.03}$ | YGd | $Si_6O_{18}$ | 55 |
| 19 | $Sr_{2.9}Pb_{0.1}$ | YGd | $Si_6O_{18}$ | 64 |
| 20 | $Sr_{2.8}Pb_{0.2}$ | YGd | $Si_6O_{18}$ | 53 |
| 21 | $Sr_{2.9}Pb_{0.1}$ | LaGd | $Si_6O_{18}$ | 60 |
| 22 | $Sr_{2.9}Pb_{0.1}$ | $Gd_2$ | $Si_6O_{18}$ | 61 |
| 23 | $Ca_{2.9}Pb_{0.1}$ | YGd | $Si_6O_{18}$ | 31 |

Examples 24 to 28

Some silicates which were activated by Pb alone, were prepared in a similar manner to that described in Example 15. The formulae of these materials as well as the results of the peak height P measurements (relative to the standard mentioned in Example 1, that is the Pb-activated barium disilicate, the position of the emission maximum $\lambda_{max}$ and half value width of the emission band $\lambda_{1/2}$ are shown in Table III.

TABLE III

| Example | Formula | | | P (%) | $\lambda_{max}$ (nm) | $\lambda_{1/2}$ (nm) |
|---|---|---|---|---|---|---|
| 24 | $Ca_{2.9}Pb_{01}$ | $Y_2$ | $Si_6O_{18}$ | 61 | 307 | 38 |
| 25 x) | $Ca_{2.9}Pb_{0.1}$ | $La_2$ | $Si_6O_{18}$ | 69 | 303 | 42 |
| 26 | $Ca_{1.45}Sr_{1.45}$ | $Pb_{0.1}Y_2$ | $Si_6O_{18}$ | 38 | 304 | 37 |
| 27 | $Sr_{2.9}Pb_{0.1}$ | $Y_2$ | $Si_6O_{18}$ | 56 | 302 | 42 |
| 28 | $Sr_{2.9}Pb_{0.1}$ | $La_2$ | $Si_6O_{18}$ | 71 | 302 | 40 |

x) The emission spectrum of this material (at 254 nm-excitation is shown as curve 3 in Figure 1.

Examples 29 to 38

Silicates, activated by Pb, Gd and Tb (Examples 29 to 33), by Pb, Gd and Dy (Examples 34 to 36) and by Pb, Gd and Mn (Examples 37 and 38) were prepared in a similar manner to that described in Example 15. Table IV shows the formulae of these silicates as well as the results of the emission band peak height measurements (254 nm-excitation) positions of the emission maximum $\lambda_{max}$ and half value width of the emission band $\lambda_{1/2}$. The peak height $P_1$ is given for the Tb-activated materials in % of the peak height of the known, Tb-activated cerium magnesium aluminate $Ce_{0.67}Tb_{0.33}MgAl_{11}O_{19}$ for the Dy-activated materials the peak height $P_2$ is shown in % of the peak height of the known Dy-activated yttrium vanadate $YVO_4$-Gd; for the Mn-activated materials the peak height $P_3$ is shown in % of the peak height of the known Mn-activated zinc silicate $Zn_2SiO_4$-Mn (willemite).

TABLE IV

| Example | Formula | $P_1$ (%) | $P_2$ (%) | $P_3$ (%) | $\lambda_{max}$ (nm) | $\lambda_{1/2}$ (nm) |
|---|---|---|---|---|---|---|
| 29 | $Sr_{2.9}Pb_{0.1}Gd_{1.98}Tb_{0.02}Si_6O_{18}$ | 32 | — | — | 543 | 12 |
| 30 a) | $Sr_{2.9}Pb_{0.1}Gd_{1.7}Tb_{0.3}Si_6O_{18}$ | 82 | — | — | 543 | 12 |
| 31 | $Sr_{2.9}Pb_{0.1}Gd_{1.4}Tb_{0.6}Si_6O_{18}$ | 73 | — | — | 543 | 12 |
| 32 | $Sr_{2.9}Pb_{0.1}Y_{0.7}GdTb_{0.3}Si_6O_{18}$ | 78 | — | — | 543 | 12 |
| 33 | $Sr_{2.9}Pb_{0.1}La_{0.7}GdTb_{0.3}Si_6O_{18}$ | 71 | — | — | 543 | 12 |
| 34 | $Sr_{2.9}Pb_{0.1}Gd_{1.99}Dy_{0.01}Si_6O_{18}$ | — | 18 | — | 573 | 20 |
| 35 b) | $Sr_{2.9}Pb_{0.1}Gd_{1.98}Dy_{0.01}Si_6O_{18}$ | — | 20 | — | 573 | 20 |
| 36 | $Sr_{2.9}Pb_{0.1}Gd_{1.94}Dy_{0.06}Si_6O_{18}$ | — | 15 | — | 573 | 20 |
| 37 c) | $Sr_{2.875}Pb_{0.1}Mn_{0.025}Gd_2Si_6O_{18}$ | — | — | 32 | 550 | 70 |
| 38 | $Sr_{2.8}Pb_{0.1}Mn_{0.1}Gd_2Si_6O_{18}$ | — | — | 17 | 550 | 70 |

a) The emission spectrum of this material is shown as curve 4 in Figure 2
b) The emission spectrum of this material is shown as curve 5 in Figure 2.
c) The emission spectrum of this material is shown as curve 6 in Figure 2.

## Claims

1. A luminescent silicate of an alkaline earth metal together with yttrium and/or lanthanum characterized in that the silicate has a composition defined by the formula

$$Me_{3-p-q}\ Pb_p\ Mn_q\ Ln_{2-r-x-y-z}\ Gd_r\ Ce_x\ Tb_y\ Dy_z\ Si_6\ O_{18}$$

wherein Me represents strontium and/or calcium and Ln yttrium and/or lanthanum,

wherein, if $q=r=x=y=z=0$, it holds that $0.01 \leqslant p \leqslant 0.50$
wherein, if $p=q=y=z=0$, it holds that $0.01 \leqslant x \leqslant 0.80$
and $0 \leqslant r \leqslant 2-x$
wherein, if $q = x = y = z = 0$, it holds that $0.01 \leqslant p \leqslant 0.50$
and $0.05 \leqslant r \leqslant 2.0$
and wherein otherwise it holds that $0.01 \leqslant p \leqslant 0.50$
$0.05 \leqslant r \leqslant 2-x-y-z$
$0 \leqslant q \leqslant 0.30$
$0 \leqslant x \leqslant 0.80$
$0 \leqslant y \leqslant 1.0$
$0 \leqslant z \leqslant 0.10$
$0.005 \leqslant q+x+y+z$.

2. A luminescent silicate as claimed in Claim 1, characterized in that the silicate has a composition defined by the formula

$$Me_{3-p}\ Pb_p\ Ln_2\ Si_6\ O_{18},$$

wherein $0.03 \leqslant p \leqslant 0.25$.

3. A luminescent silicate as claimed in Claim 1, characterized in that the silicate has a composition defined by the formula

$$Me_{3-p}\ Pb_p\ Ln_{2-r}\ Gd_r\ Si_6\ O_{18},$$

wherein $0.01 \leqslant p \leqslant 0.50$ and $0.50 \leqslant r \leqslant 2.0$.

4. A luminescent silicate as claimed in Claim 1, characterized in that

$$0 \leqslant r \leqslant 2-x$$
$$0.05 \leqslant x \leqslant 0.50$$

and furthermore $p = q = y = z = 0$.

5. A luminescent silicate as claimed in Claim 1, characterized in that

$$0.01 \leqslant p \leqslant 0.50$$
$$0.05 \leqslant r \leqslant 2-y$$
$$0.05 \leqslant 7 \leqslant 0.75$$

and furthermore $q = x = z = 0$.

6. A luminescent silicate as claimed in Claim 1, characterized in that

$$0.01 \leqslant p \leqslant 0.50$$
$$0.05 \leqslant r \leqslant 2-z$$
$$0.005 \leqslant z \leqslant 0.08$$

$q = x = y = 0$.

7. A luminescent silicate as claimed in Claim 1, characterized in that

$$0.01 \leqslant p \leqslant 0.50$$
$$0.05 \leqslant r \leqslant 2$$
$$0.005 \leqslant q \leqslant 0.15$$

$x = y = z = 0$.

8. A luminescent screen comprising a luminescent silicate as claimed in Claims 1, 2, 3, 4, 5, 6 or 7.

9. A low pressure mercury vapour discharge lamp comprising a luminescent screen as claimed in Claim 8.

**Revendications**

1. Silicate luminescent d'un métal alcalinoterreux ensemble avec de l'yttrium et/ou du lanthane caractérisé en ce que le silicate répond à la formule

$$Me_{3-p-q}\, Pb_p\, Mn_q\, Ln_{2-r-x-y-z}\, Gd_r\, Ce_x\, Tb_y\, Dy_z\, Si_6\, O_{18}$$

formule dans laquelle Me représente du strontium et/ou du calcium et Ln de l'yttrium et/ou du lanthane,

dans laquelle, si $q = r = x = y = z = 0$, il s'applique que $0{,}01 \leqslant p \leqslant 0{,}50$
dans laquelle, si $p = q = y = z = 0$, il s'applique que $0{,}01 \leqslant x \leqslant 0{,}80$
et $0 \leqslant r \leqslant 2-x$
dans laquelle, si $q = x = y = z = 0$, il s'applique que $0{,}01 \leqslant p \leqslant 0{,}50$
et $0.05 \leqslant r \leqslant 2.0$
et dans laquelle il s'applique en outre que $0{,}01 \leqslant p \leqslant 0{,}50$
$0.05 \leqslant r \leqslant 2-x-y-z$
$0 \leqslant q \leqslant 0.30$
$0 \leqslant x \leqslant 0.80$
$0 \leqslant y \leqslant 1.0$
$0 \leqslant z \leqslant 0.10$
$0.005 \leqslant q + x + y + z$.

2. Silicate luminescent selon la revendication 1, caractérisé en ce que le silicate présente une composition répondant à la formule

$$Me_{3-p}Pb_pLn_2\, Si_6\, O_{18},$$

formule dans laquelle $0{,}03 \leqslant p \leqslant 0{,}25$.

3. Silicate luminescent selon la revendication 1, caractérisé en ce que le silicate présente une composition répondant à la formule

$$Me_{3-p}\, Pb_p\, Ln_{2-r}\, Gd_r\, Si_6\, O_{18},$$

formule dans laquelle $0{,}01 \leqslant p \leqslant 0{,}50$ et $0{,}50 \leqslant r \leqslant 2{,}0$.

4. Silicate luminescent selon la revendication 1, caractérisé en ce que

$$0 \leqslant r \leqslant 2-x$$
$$0{,}05 \leqslant x \leqslant 0{,}50$$

et puis $p = q = y = z = 0$.

5. Silicate luminescent selon la revendication 1, caractérisé en ce que

$$0{,}01 \leqslant p \leqslant 0{,}50$$
$$0{,}05 \leqslant r \leqslant 2-y$$
$$0{,}05 \leqslant y \leqslant 0{,}75$$

et puis $q = x = z = 0$.

6. Silicate luminescent selon la revendication 1, caractérisé en ce que

$$0{,}01 \leqslant p \leqslant 0{,}50$$
$$0{,}05 \leqslant r \leqslant 2-z$$
$$0{,}005 \leqslant z \leqslant 0{,}08$$

$q = x = y = 0$.

7. Silicate luminescent selon la revendication 1, caractérisé en ce que

$$0{,}01 \leqslant p \leqslant 0{,}50$$
$$0{,}05 \leqslant r \leqslant 2$$
$$0{,}005 \leqslant q \leqslant 0{,}15$$

$x = y = z = 0$.

8. Ecran luminescent muni d'un silicate luminescent selon la revendication 1, 2, 3, 4, 5, 6 ou 7.

9. Lampe à décharge dans la vapeur de mercure à basse pression munie d'un écran luminescent selon la revendication 8.

**Patentansprüche**

1. Leuchtendes Silikat eines Erdalkalimetalls mit Yttrium und/oder Lanthan, dadurch gekennzeichnet, dass das Silikat der Formel

$$Me_{3-p-q}Pb_pMn_qLn_{2-r-x-y-z}Gd_rCe_xTb_yDy_zSi_6O_{18}$$

entspricht in der Me Strontium und/oder Calcium und Ln Yttrium und/oder Lanthan darstellt,

wobei, wenn $q = r = x = y = z = 0$ ist, gilt: $0{,}01 \leqslant p \leqslant 0{,}50$,
wobei, wenn $p = q = y = z = 0$ ist, gilt: $0{,}01 \leqslant x \leqslant 0{,}80$
und $0 \leqslant r \leqslant 2-x$,
wobei, wenn $q = x = y = z = 0$ ist, gilt: $0{,}01 \leqslant p \leqslant 0{,}50$
und $0{,}05 \leqslant r \leqslant 2{,}0$,
und wobei andernfalls gilt:
$0{,}01 \leqslant p \leqslant 0{,}50$
$0{,}05 \leqslant r \leqslant 2-x-y-z$
$0 \leqslant q \leqslant 0{,}30$
$0 \leqslant x \leqslant 0{,}80$
$0 \leqslant y \leqslant 1{,}0$
$0 \leqslant z \leqslant 0{,}10$ und
$0.005 \leqslant q + x + y + z$.

2. Leuchtendes Silikat nach Anspruch 1, dadurch gekennzeichnet, dass das Silikat der Formel

$$Me_{3-p}Pb_pLn_2Si_6O_{18}$$

entspricht in der $0{,}03 \leqslant p \leqslant 0{,}25$ ist.

3. Leuchtendes Silikat nach Anspruch 1, dadurch gekennzeichnet, dass das Silikat der Formel

$$Me_{3-p}Pb_pLn_{2-r}Gd_rSi_6O_{18}$$

entspricht in der $0{,}01 \leqslant p \leqslant 0{,}50$ und $0.50 \leqslant r \leqslant 2{,}0$ ist.

4. Leuchtendes Silikat nach Anspruch 1, dadurch gekennzeichnet, dass

$$0 \leqslant r \leqslant 2-x$$
$$0{,}05 \leqslant x \leqslant 0{,}50$$

und ausserdem $p = q = y = z = 0$.

5. Leuchtendes Silikat nach Anspruch 1, dadurch gekennzeichnet, dass

$$0{,}01 \leqslant p \leqslant 0{,}50$$
$$0{,}05 \leqslant r \leqslant 2-y$$
$$0{,}05 \leqslant y \leqslant 0{,}75$$

und ausserdem $q = x = z = 0$.

6. Leuchtendes Silikat nach Anspruch 1, dadurch gekennzeichnet, dass

$$0{,}01 \leqslant p \leqslant 0{,}50$$
$$0{,}05 \leqslant r \leqslant 2-z$$
$$0{,}005 \leqslant z \leqslant 0{,}08$$

und $q = x = y = 0$.

7. Leuchtendes Silikat nach Anspruch 1, dadurch gekennzeichnet dass

$$0{,}01 \leqslant p \leqslant 0{,}50$$
$$0{,}05 \leqslant r \leqslant 2$$
$$0{,}005 \leqslant q \leqslant 0{,}15$$

und $x = y = z = 0$.

8. Leuchtschirm mit einem Leuchtenden Silikat nach Anspruch 1, 2, 3, 4, 5, 6 oder 7.

9. Niederdruck-Quecksilberdampf-Entladungslampe, die mit einem Leuchtschirm nach Anspruch 8 versehen ist.

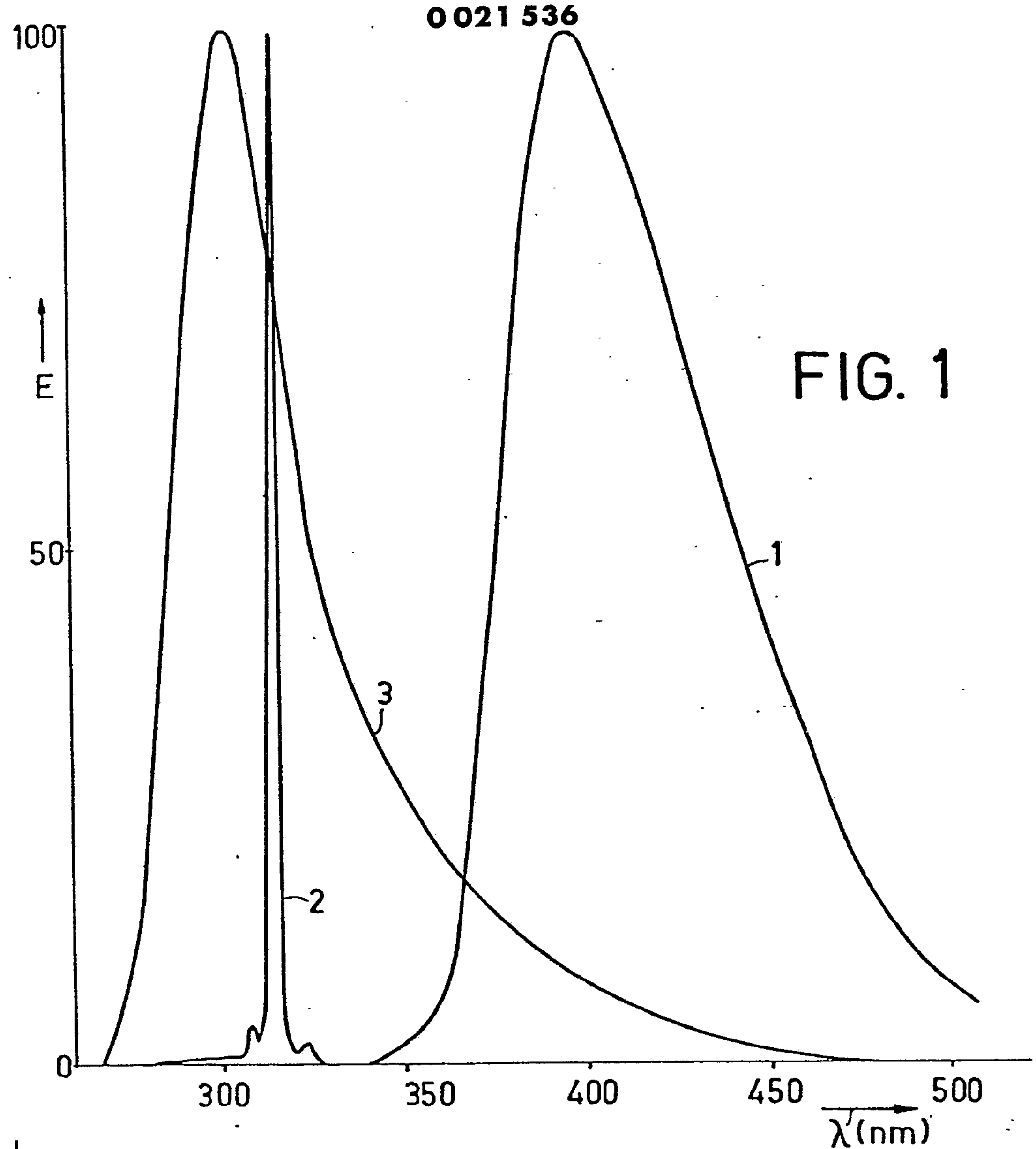


FIG. 1

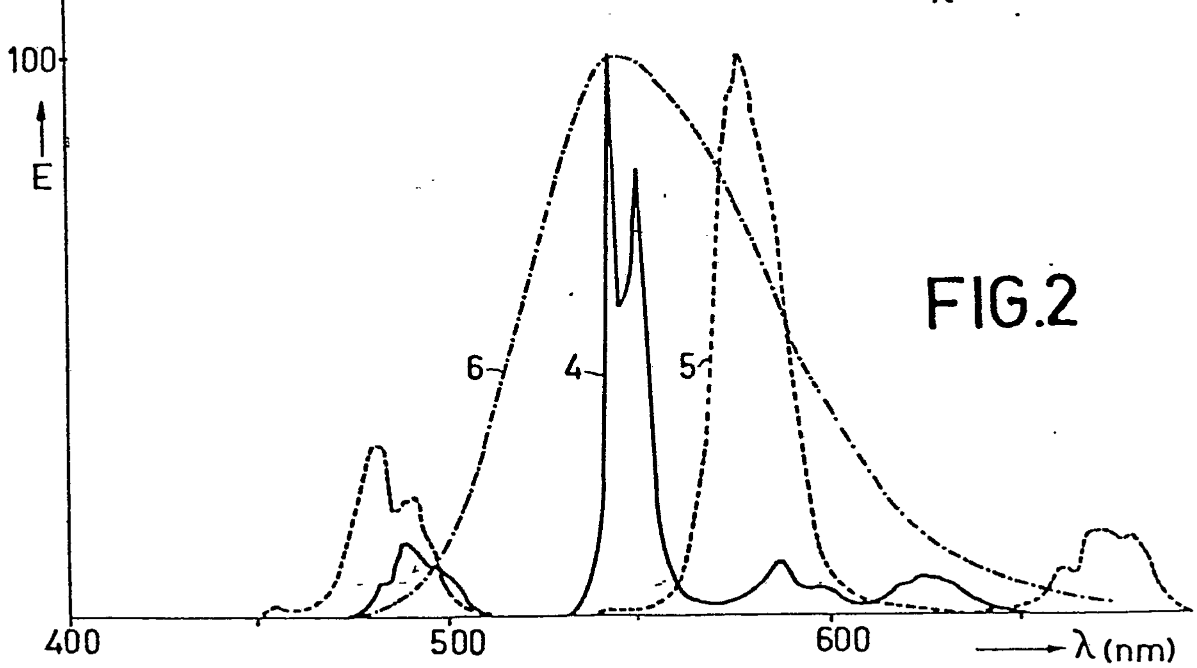


FIG.2